# EUROPEAN PATENT APPLICATION

(11) **EP 4 480 609 A1**
(43) Date of publication of application: **25.12.2024**
(21) Application number: 22927287.7
(22) Date of filing: 07.11.2022
(51) Int. Cl.: B22F 12/53, B22F 10/25, B33Y 30/00

(54) **AM DEVICE**

(30) Priority: 15.02.2022 JP 2022021490
(71) Applicant: EBARA CORPORATION, Ota-ku, Tokyo 144-8510 (JP)
(72) Inventor: SHINOZAKI, Hiroyuki, Tokyo 144-8510 (JP)
(74) Representative: Pritzlaff, Stefanie Lydia
(86) International application number: PCT/JP2022/041286
(87) International publication number: WO 2023/157393

(57) **Abstract**

The present invention provides a technique for evenly supplying powder used as a material to a DED nozzle.

According to one aspect, an AM apparatus for manufacturing a fabrication object is provided. This AM apparatus includes a DED nozzle. The DED nozzle includes a powder port provided at a distal end of a main body of the DED nozzle and configured to eject a powder material therefrom, and a powder passage provided in communication with the powder port and configured to allow the powder material to pass through inside the main body of the DED nozzle. The AM apparatus further includes a first pipe, a separation wall extending from an end portion of the first pipe toward an upstream side inside the first pipe, and a plurality of second pipes connected to the end portion of the first pipe. The separation wall divides the end portion of the first pipe into a plurality of regions, and the plurality of second pipes is connected to the plurality of regions of the first pipe, respectively. The second pipes are connected to the powder passage of the DED nozzle.

## Description

### TECHNICAL FIELD

The present application relates to an AM apparatus. The present application claims priority under the Paris Convention to Japanese Patent Application No. 2022-021490 filed on February 15, 2022. The entire disclosure of Japanese Patent Application No. 2022-021490 including the specification, the claims, the drawings, and the abstract is incorporated herein by reference in its entirety.

### BACKGROUND ART

There are known techniques for directly fabricating a three-dimensional object based on three-dimensional data on a computer that expresses the three-dimensional object. For example, the Additive Manufacturing (AM) technique is known. One example thereof is Direct Energy Deposition (DED) as the AM technique employing the deposition method. DED is a technique that carries out fabrication by melting and solidifying a metal material together with a base material using an appropriate heat source while supplying the metal material locally. Another example of the AM technique is Powder Bed Fusion (PBF). According to PBF, each layer of the three-dimensional object is fabricated by subjecting two-dimensionally bedded metal powder to irradiation of a fabrication target portion thereof with a laser beam or an electron beam serving as a heat source, and melting and solidifying or sintering the metal powder. In PBF, the desired three-dimensional object can be fabricated by repeating such a process.

### CITATION LIST

### PATENT LITERATURE

PTL 1: Japanese Patent Application Laid-Open No. 2018-94623
PTL 2: Japanese Patent Application Laid-Open No. 2018-90376

### SUMMARY OF INVENTION

### TECHNICAL PROBLEM

In the DED method, generally, a laser or electron beam serving as a heat source is supplied from a DED nozzle to a predetermined location. Further, powder used as the material is supplied from the DED nozzle to the predetermined location together with carrier gas. A powder passage through which the powder used as the material passes, and a powder port for ejecting the powder are formed in the DED nozzle. A plurality of powder passages and a plurality of powder ports may be formed in the DED nozzle to evenly supply the powder used as the material to the predetermined location. In this case, it is desirable to evenly supply the powder to each of the powder passages. One of objects of the present application is to provide a technique for evenly supplying powder used as a material to a DED nozzle.

### SOLUTION TO PROBLEM

According to one aspect, an AM apparatus configured to manufacture a fabrication object is provided. This AM apparatus includes a DED nozzle. The DED nozzle includes a powder port provided at a distal end of a main body of the DED nozzle and configured to eject a powder material therefrom, and a powder passage provided in communication with the powder port and configured to allow the powder material to pass through inside the main body of the DED nozzle. The AM apparatus further includes a first pipe, a separation wall extending from an end portion of the first pipe toward an upstream side inside the first pipe, and a plurality of second pipes connected to the end portion of the first pipe. The separation wall divides the end portion of the first pipe into a plurality of regions, and the plurality of second pipes is connected to the plurality of regions of the first pipe, respectively. The second pipes are connected to the powder passage of the DED nozzle.

### BRIEF DESCRIPTION OF DRAWINGS

Fig. 1 schematically illustrates an AM apparatus for manufacturing a fabrication object according to one embodiment.
Fig. 2 schematically illustrates a cross section of a DED nozzle according to one embodiment.
Fig. 3 is a cross-sectional view schematically illustrating piping of a powder supply mechanism according to one reference example.
Fig. 4 is a cross-sectional view schematically illustrating piping of a powder supply mechanism according to one reference example.
Fig. 5A is a cross-sectional view schematically illustrating piping of a powder supply mechanism according to one embodiment.
Fig. 5B is a cross-sectional perspective view cut away at a position 5B illustrated in Fig. 5A.
Fig. 5C is a cross-sectional perspective view cut away at a position 5C illustrated in Fig. 5A.
Fig. 5D is a cross-sectional perspective view cut away at a position 5D illustrated in Fig. 5A.
Fig. 6A is a cross-sectional view schematically illustrating piping of a powder supply mechanism according to one embodiment.
Fig. 6B is a cross-sectional perspective view cut away at a position 6B illustrated in Fig. 6A.
Fig. 6C is a cross-sectional perspective view cut away at a position 6C illustrated in Fig. 6A.
Fig. 6D is a cross-sectional perspective view cut away at a position 6D illustrated in Fig. 6A.
Fig. 7A is a cross-sectional view schematically illustrating piping of a powder supply mechanism according to one embodiment.
Fig. 7B is a cross-sectional perspective view cut away at a position 7B illustrated in Fig. 7A.
Fig. 7C is a cross-sectional perspective view cut away at a position 7C illustrated in Fig. 7A.
Fig. 7D is a cross-sectional perspective view cut away at a position 7D illustrated in Fig. 7A.
Fig. 7E is a cross-sectional perspective view cut away at a position 7E illustrated in Fig. 7A.

### DESCRIPTION OF EMBODIMENTS

In the following description, embodiments of an AM apparatus for manufacturing a fabrication object according to the present invention will be described with reference to the accompanying drawings. In the accompanying drawings, the same or similar components will be indicated by the same or similar reference numerals, and redundant descriptions regarding the same or similar components may be omitted in the description of each of the embodiments. Further, features described in each of the embodiments are also applicable to other embodiments in so far as they do not contradict each other.

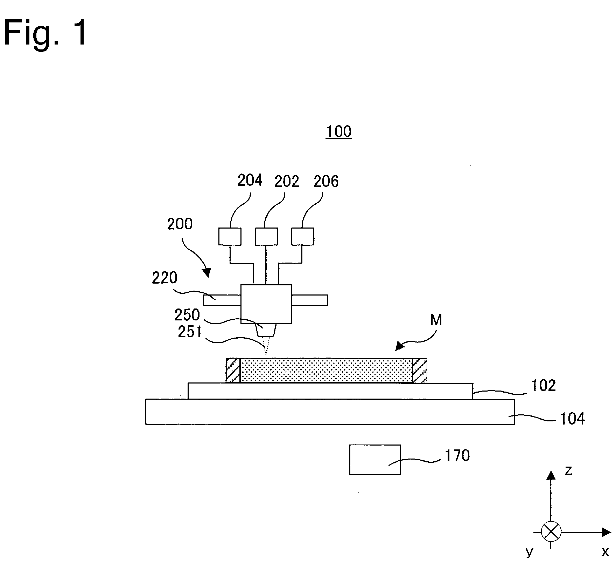

Fig. 1 schematically illustrates an AM apparatus for manufacturing a fabrication object according to one embodiment. As illustrated in Fig. 1, an AM apparatus 100 includes a base plate 102. A fabrication object M will be fabricated on the base plate 102. The base plate 102 can be a plate made from any material capable of supporting the fabrication object M. In one embodiment, the base plate 102 is disposed on an XY stage 104. The XY stage 104 is a stage 104 movable in two directions (an x direction and a y direction) perpendicular to each other in a horizontal plane. The XY stage 104 may be coupled with a lift mechanism movable in the height direction (a z direction). Alternatively, in one embodiment, the XY stage 104 may be omitted.

In one embodiment, the AM apparatus 100 includes a DED head 200 as illustrated in Fig. 1. The DED head 200 is connected to a laser source 202, a material powder source 204, and a gas source 206. The DED head 200 includes a DED nozzle 250. The DED nozzle 250 is configured to inject laser, material powder, and gas from the laser source 202, the material powder source 204, and the gas source 206, respectively.

The DED head 200 can be any DED head, and, for example, a known DED head can be used as it. The DED head 200 is coupled with a movement mechanism 220, and is movably configured. The movement mechanism 220 can be any movement mechanism, and, for example, may be a movement mechanism capable of moving the DED head 200 along a specific axis such as a rail or may be formed from a robot capable of moving the DED head 200 to an arbitrary position and in an arbitrary direction. As one embodiment, the movement mechanism 220 can be configured to be able to move the DED head 200 along perpendicular three axes.

The AM apparatus 100 according to one embodiment includes a control device 170 as illustrated in Fig. 1. The control device 170 is configured to control the operations of various kinds of operation mechanisms of the AM apparatus 100, such as the above-described DED head 200 and various kinds of operation mechanisms. The control device 170 can be constituted by a general computer or a dedicated computer.

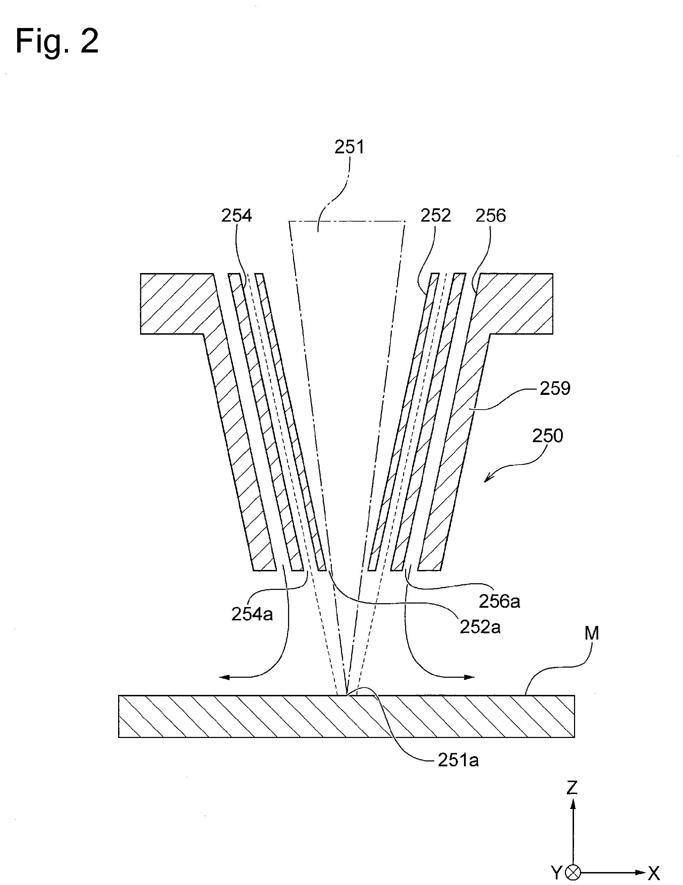

Fig. 2 schematically illustrates a cross section of the DED nozzle 250 according to one embodiment. The DED nozzle 250 according to the illustrated embodiment is a DED nozzle main body 259 having a generally truncated conical shape. The DED nozzle 250 according to the illustrated embodiment includes a first passage 252 at the center of the DED nozzle main body 259. Laser 251 passes through the first passage 252. After passing through the first passage 252, the laser is emitted from a laser port 252a of the DED nozzle main body 259. Further, the DED nozzle main body 259 includes a second passage 254 outside the first passage 252. The material powder and carrier gas for transporting the material powder pass through the second passage 254. After passing through the second passage 254, the material powder is emitted from a powder port 254a. Further, the DED nozzle main body 259 includes a shield gas passage 256 outside the powder passage 254. Shield gas passes through the shield gas passage 256. After passing through the shield gas passage 256, the shield gas is emitted from a gas port 256a. In one embodiment, the DED nozzle 250 does not have to include the shield gas passage 256 and the gas port 256a.

The powder passage 254 is configured in such a manner that the material powder discharged from the DED nozzle 250 is converged to substantially the same position as a focal point 251a of the laser 251. The flows of the material powder and the carrier gas are indicated by broken lines in Fig. 2. The carrier gas can be inertial gas, such as argon gas or nitrogen gas. Argon gas heavier than air is further desirably used as the carrier gas. Using the inertial gas as the carrier gas allows a molten pool formed from the melted material powder to be covered with the inertial gas, thereby contributing to preventing oxidation. However, due to the flow of the carrier gas emitted from the powder port 254a, air outside it may be entrained therein. In light thereof, the DED nozzle 250 illustrated in Fig. 2 can prevent surrounding air from being entrained by supplying the shield gas at a low speed from the shield gas passage 256 provided outside the powder passage 254, from which the powder material and the carrier gas are discharged. Preventing the surrounding air (especially, oxygen) from being entrained by the carrier gas can contribute to preventing a metal oxide film from being generated at the time of the fabrication, and, further, allow a highly wettable molten pool to be formed. The flow of the shield gas is indicated by arrows in Fig. 2. The shield gas can be the same kind of gas as the carrier gas.

In one embodiment, the AM apparatus 100 includes a powder supply mechanism 300. The powder supply mechanism 300 is configured to supply the material powder from the material powder source 204 to the second passage 254 of the DED nozzle 250. In one embodiment, the second passage 254 of the DED nozzle 250 is divided into a plurality of regions circumferentially. In this case, desirably, the material powder is evenly supplied to the plurality of regions of the second passage 254. Alternatively, in one embodiment, the second passage 254 of the DED nozzle 250 may be formed as a single passage 254 without being divided into the plurality of regions. The powder supply mechanism 300 may be configured to supply the material powder to the single second passage 254 formed in this manner via a plurality of circumferential positions of the second passage 254.

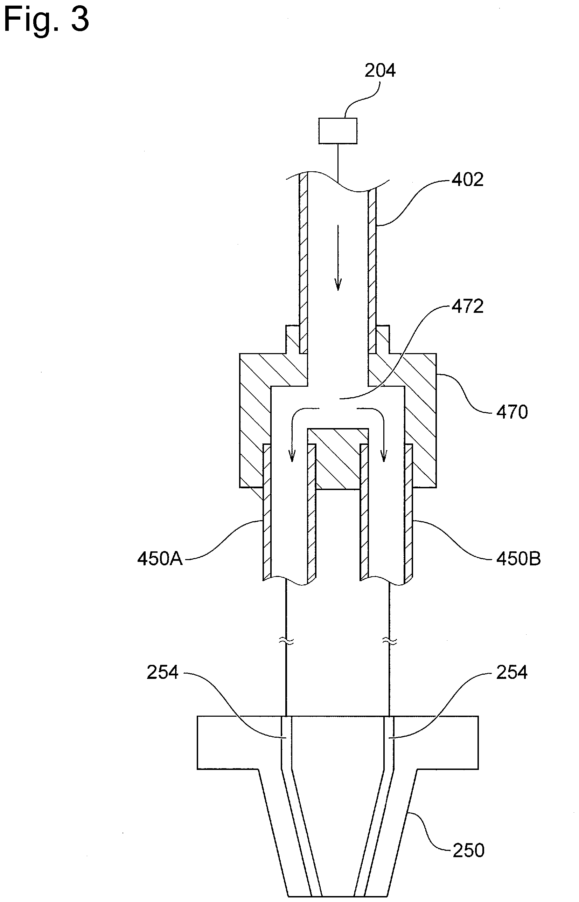

Fig. 3 is a cross-sectional view illustrating piping of a powder supply mechanism 400 according to one reference example. The piping of the example illustrated in Fig. 3 includes a first pipe 402 connected to the material powder source 204, a plurality of second pipes 450A and 450B connected to the second passage 254 of the DED nozzle 250, and an adapter 470 for connecting the first pipe 402 and the second pipes 450. As illustrated in Fig. 3, the adapter 470 includes a branch path 472 therein. After passing through the first pipe 402, the material powder is distributed to the plurality of second pipes 450A and 450B via the adapter 470 and then supplied to the DED nozzle 250.

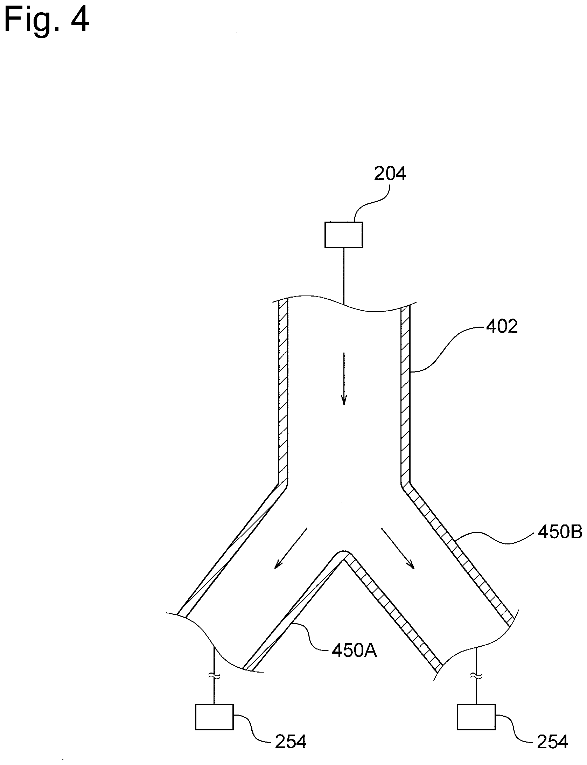

Fig. 4 is a cross-sectional view illustrating piping of the powder supply mechanism 400 according to one reference example. The piping of the example illustrated in Fig. 4 includes the first pipe 402 connected to the material powder source 204, and the plurality of second pipes 450A and 450B connected to the second passage 254 of the DED nozzle 250. In the reference example illustrated in Fig. 4, the plurality of second pipes 450A and 450B is connected to the first pipe 402 directly without the intervention of the adapter 470 illustrated in Fig. 3.

In the powder supply mechanism 400 according to the reference examples illustrated in Figs. 3 and 4, the cross-sectional area of the pipe drastically changes at the position of the branch portion where the material powder is distributed from the first pipe 402 to the plurality of second pipes 450. More specifically, the cross-sectional area is large from the first pipe 402 to the branch portion, and is small from the branch portion to each of the second pipes 450A and 450B. The presence of such a change in the cross-sectional area at the branch portion may lead to occurrence of an unstable swirl in the carrier gas flowing in the pipe, making it impossible to evenly distribute the material powder to the plurality of second pipes 450A and 450B.

Further, in the case where the adapter 470 including the branch portion is used like the reference example illustrated in Fig. 3, the material powder may be deposited on a part of the adapter 470. The material powder deposited on the adapter 470 may accidentally flow down into one of the second pipes 450A and 450b. In such a case, the material powder may also be unable to be evenly distributed to the plurality of second pipes 450A and 450B. Especially, when supplied to the DED nozzle 250 at a low speed, the material powder is easily deposited onto the adapter 470. Generally, in the DED method, the powder supply mechanism is mostly designed in such a manner that the powder material and the carrier gas emitted from the DED nozzle 250 flow at 30 m/s to 40 m/s. When the carrier gas flows at 30 m/s to 40 m/s or so, the powder material is at low risk of being deposited on the adapter 470. However, for example, in a case where the fabrication is carried out according to the DED method under a condition that the powder material is present in the fabrication region, the powder material and the carrier gas may be supplied to the DED nozzle 250 at a speed low enough to prevent the powder material present in the fabrication region from being blown off. For example, it is possible that the powder supply mechanism, even based on the DED method, is designed in such a manner that the powder material and the carrier gas emitted from the DED nozzle 250 flow at as low speed as 10 m/s or lower or 5 m/s or lower. It is desirable that the material powder can be stably supplied to the DED nozzle 250 even under such a condition.

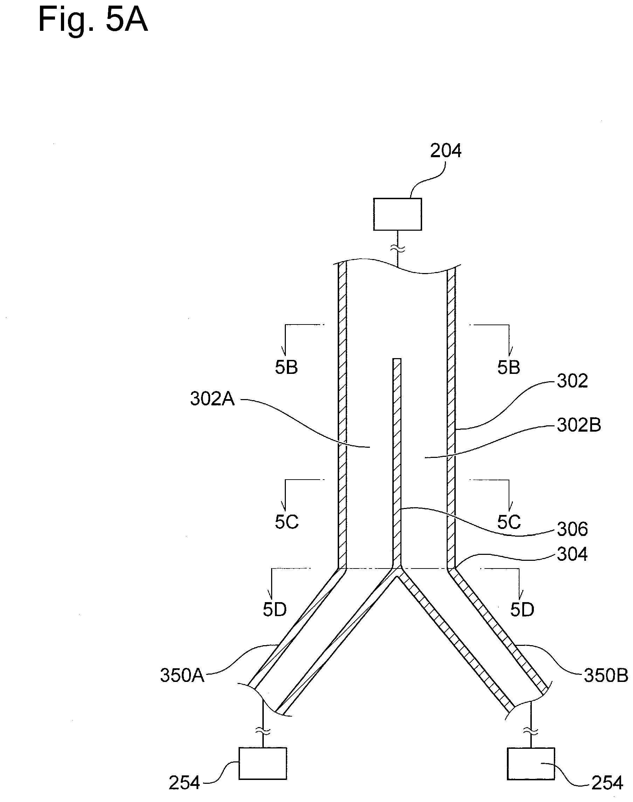

Fig. 5A is a cross-sectional view illustrating piping of the powder supply mechanism 300 according to one embodiment. The powder supply mechanism 300 illustrated in Fig. 5A includes a first pipe 302 connected to the material powder source 204, and a plurality of second pipes 350A and 350B connected to the second passage 254 of the DED nozzle 250.

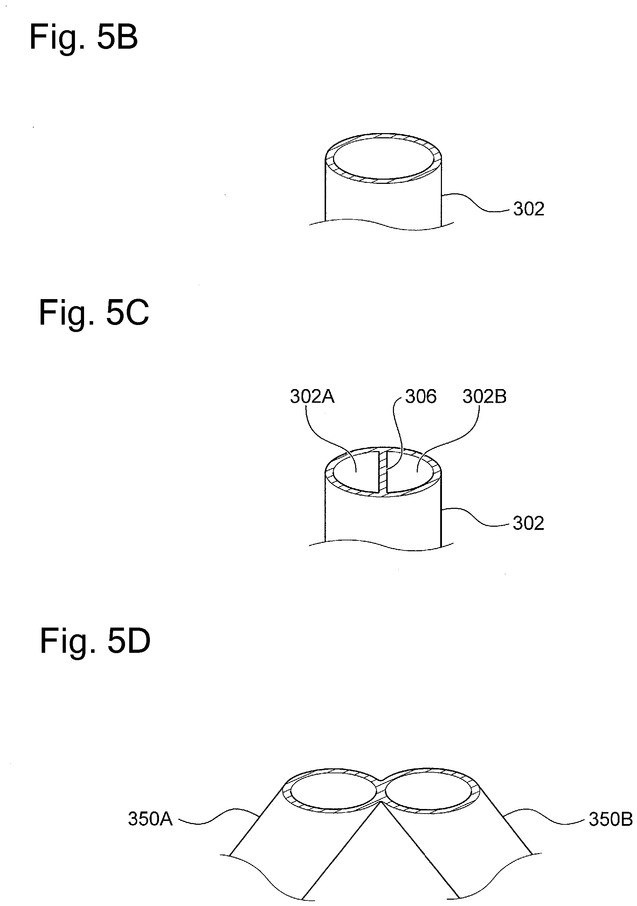

The first pipe 302 illustrated in Fig. 5A includes a separation wall 306 extending from a downstream end portion 304 toward the upstream side inside the first pipe 302. Fig. 5B is a cross-sectional perspective view cut away at a position 5B illustrated in Fig. 5A. Fig. 5C is a cross-sectional perspective view cut away at a position 5C illustrated in Fig. 5A. Fig. 5D is a cross-sectional perspective view cut away at a position 5D illustrated in Fig. 5A. As illustrated, the separation wall 306 is formed so as to divide the inner flow passage at the end portion 304 of the first pipe 302 into halves to define conduits 302A and 302B. As another embodiment, the separation wall 306 may be configured to divide the inner flow passage at the end portion 304 of the first pipe 302 into thirds, fourths, or the like to define any number of regions.

At the position 5C illustrated in Fig. 5A, the conduits 302A and 302B divided by the separation wall 306 are each formed into a flow passage semi-circular in cross section. In the illustrated embodiment, the conduits 302A and 302B divided by the separation wall 306 are formed so as to gradually become circular in cross section from the position 5C toward the end portion 304 of the first pipe 302. As illustrated, the conduits 302A and 302B divided by the separation wall 306 are connected to the second pipes 350A and 350B at the end portion 304 of the first pipe 302, respectively.

In the embodiment illustrated in Figs. 5A to 5D, a sum of the cross-sectional areas of the plurality of conduits 302A and 302B divided by the separation wall 306 of the first pipe 302 is approximately equal to the cross-sectional area of the conduit before the division. Assuming that s represents the cross-sectional area of the conduit of the first pipe 302 before the division and the first pipe 302 is divided into n equal regions by the separation wall 306, each flow passage has a cross-sectional area of approximately s/n. Therefore, desirably, the separation wall 306 has a thin thickness.

As described above, the cross-sectional area of the conduit little changes when divided into the plurality of flow passages in the first pipe 302. This can make it less likely for an unstable swirl to occur in the carrier gas flowing in the first pipe 302. Therefore, the powder material flowing together with the carrier gas in the first pipe 302 can be stably evenly distributed to the plurality of flow passages.

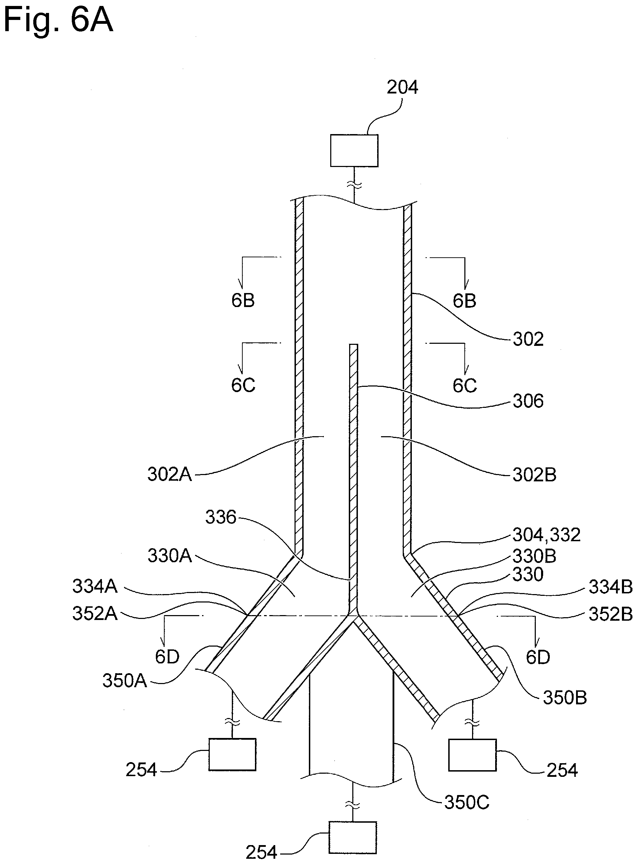

Fig. 6A is a cross-sectional view illustrating piping of the powder supply mechanism 300 according to one embodiment. The powder supply mechanism 300 illustrated in Fig. 6A includes the first pipe 302 connected to the material powder source 204, and four second pipes 350A, 350B, 350C, and 350D connected to the second passage 254 of the DED nozzle 250. However, the second pipe 350D is omitted in Fig. 6A.

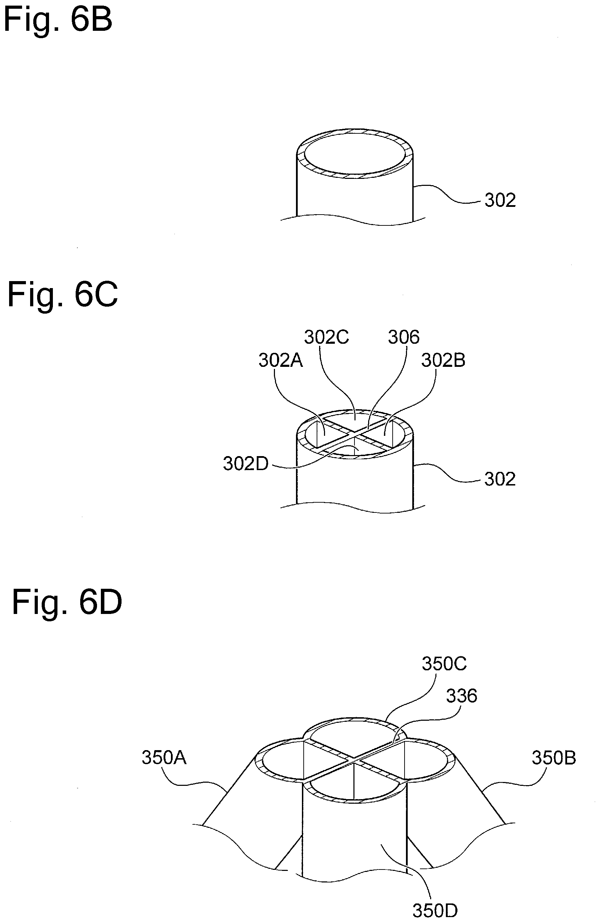

The first pipe 302 illustrated in Fig. 6A includes the separation wall 306 extending from the downstream end portion 304 toward the upstream side inside the first pipe 302. Fig. 6B is a cross-sectional perspective view cut away at a position 6B illustrated in Fig. 6A. Fig. 6C is a cross-sectional perspective view cut away at a position 6C illustrated in Fig. 6A. As illustrated, the separation wall 306 is formed so as to divide the inner flow passage at the end portion 304 of the first pipe 302 into fourths to define the conduits 302A, 302B, 302C, and 302D. As another embodiment, the separation wall 306 may be configured to divide the inner flow passage at the end portion 304 of the first pipe 302 into halves, thirds, or the like to define any number of regions.

In the embodiment illustrated in Fig. 6A, the first pipe 302 and the plurality of second pipes 350A, 350B, 350C, and 350D are connected via a transition portion 330. As illustrated in Fig. 6A, the downstream end portion 304 of the first pipe 302 is connected to an upstream end portion 332 of the transition portion 330, and upstream end portions 352A, 352B, 352C, and 352D of the second pipes 350A, 350B, 350C, and 350D are connected to downstream end portions 334A, 334B, 334C, and 334C of the transition portion 330, respectively. As illustrated, the transition portion 330 includes a transition portion separation wall 336 connected to the separation wall 306 of the first pipe 302. In other words, the separation wall 306 of the first pipe 302 is extended to the transition portion 330, and the separation wall 306 extended to the transition portion 330 will be referred to as the transition portion separation wall 336. Fig. 6D is a cross-sectional perspective view cut away at a position 6D illustrated in Fig. 6A. As illustrated, the transition portion 330 is divided into four flow passages, flow passages 330A, 330B, 330C, and 330D by the transition portion separation wall 336, and these flow passages 330A, 330B, 330C, and 330D are connected to the second pipes 350A, 350B, 350C, and 350D, respectively.

In the embodiment illustrated in Figs. 6A to 6D, the first pipe 302 is divided into four conduits 302A, 302B, 302C, and 302D fan-shaped in cross section by the separation wall 306. In the illustrated embodiment, the conduits 302A, 302B, 302C, and 302D identically fan-shaped in cross section extend until reaching the end portion 304 of the first pipe 302. In the illustrated embodiment, the respective cross sections of the conduits 330A, 330B, 330C, and 330D are fan-shaped at the upstream end portion 332 of the transition portion 330, but are deformed so as to become more circular toward the downstream end portions 334A, 334B, 334C, and 334D.

In the embodiment illustrated in Figs. 6A to 6D, a sum of the cross-sectional areas of the plurality of conduits divided by the separation wall 306 inside the first pipe 302 is approximately equal to the cross-sectional area of the conduit before the division. Assuming that s represents the cross-sectional area of the conduit of the first pipe 302 before the division and the first pipe 302 is divided into n equal regions by the separation wall 306, each flow passage has a cross-sectional area of approximately s/n. Therefore, desirably, the separation wall 306 has a thin thickness.

In the embodiment illustrated in Figs. 6A to 6D, the cross-sectional area of the flow passage changes at the transition portion 330. However, the flow passage is already divided into the plurality of conduits by the separation wall 306 at a position upstream of the end portion 304 of the first pipe 302, and therefore the material powder is already distributed by the separation wall 306 of the first pipe 302. This can make it less likely for the material powder to be unevenly distributed due to a disturbed flow of the carrier gas according to a change in the cross-sectional area of the flow passage at the transition portion 330.

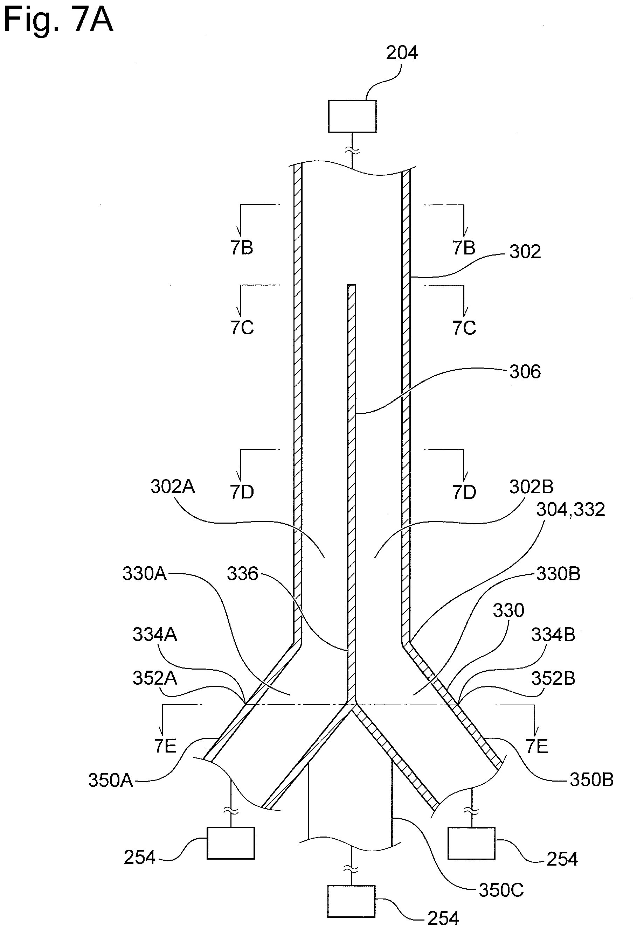

Fig. 7A is a cross-sectional view illustrating piping of the powder supply mechanism 300 according to one embodiment. The powder supply mechanism 300 illustrated in Fig. 7A includes the first pipe 302 connected to the material powder source 204, and the four second pipes 350A, 350B, 350C, and 350D connected to the second passage 254 of the DED nozzle 250.

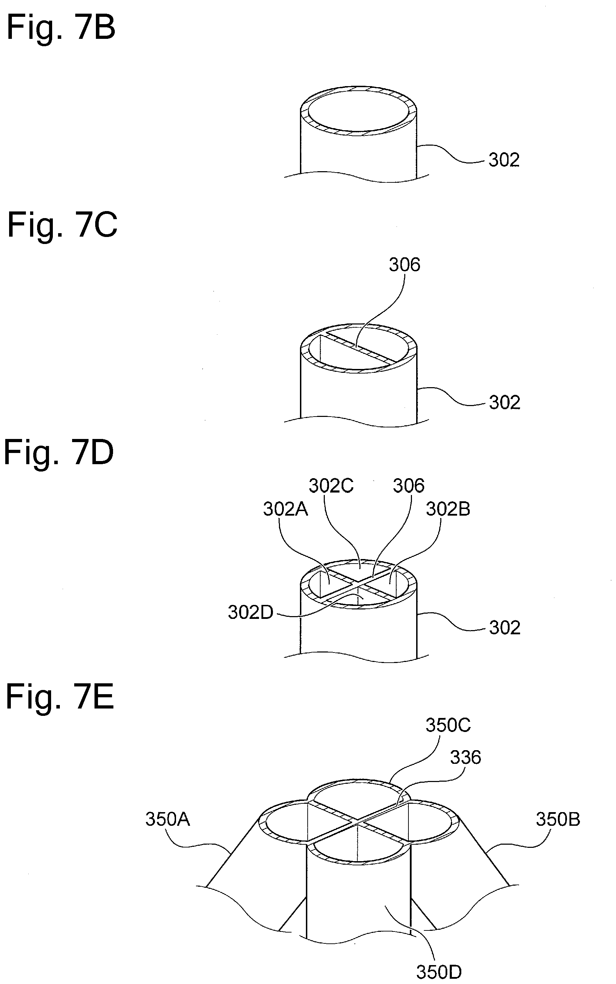

The first pipe 302 illustrated in Fig. 7A includes the separation wall 306 extending from the downstream end portion 304 toward the upstream side inside the first pipe 302. Fig. 7B is a cross-sectional perspective view cut away at a position 7B illustrated in Fig. 7A. Fig. 7C is a cross-sectional perspective view cut away at a position 7C illustrated in Fig. 7A. Fig. 7D is a cross-sectional perspective view cut away at a position 7D illustrated in Fig. 7A.

As illustrated in Figs. 7A and 7C, the separation wall 306 of the first pipe 302 divides the flow passage of the first pipe 302 into halves at the position 7C, which is the most upstream end portion of the separation wall 306. Then, as illustrated in Figs. 7A and 7D, the bisected flow passages are further each divided into halves at the position 7D, which is an intermediate position of the separation wall 306. As illustrated, in the present embodiment, the first pipe 302 is divided into the four conduits 302A, 302B, 302C, and 302D at the end portion 304. As another embodiment, the separation wall 306 of the first pipe 302 may be formed so as to divide the flow passage into arbitrary n passages on the upstream side and further into arbitrary m passages at the intermediate position, thereby sectioning the flow passage into n x m passages in total at the end portion 304 of the first pipe 302. In this case, n and m are natural numbers equal to or larger than 2.

In the embodiment illustrated in Fig. 7A, the first pipe 302 and the plurality of second pipes 350A, 350B, 350C, and 350D are connected via the transition portion 330.

Fig. 7E is a cross-sectional perspective view cut away at a position 7E illustrated in Fig. 7A. The configuration of the transition portion 330 is similar to the embodiment illustrated in Figs. 6A to 6D, and therefore the description thereof will be omitted here.

In the embodiment illustrated in Figs. 7A to 7E, a sum of the cross-sectional areas of the plurality of conduits divided by the separation wall 306 inside the first pipe 302 is approximately equal to the cross-sectional area of the conduit before the division. Assuming that s represents the cross-sectional area of the conduit of the first pipe 302 before the division and the first pipe 302 is divided into n equal regions by the separation wall 306 at the end portion 304, each flow passage has a cross-sectional area of approximately s/n. Therefore, desirably, the separation wall 306 has a thin thickness.

In the embodiment illustrated in Figs. 7A to 7E, the cross-sectional area of the flow passage changes at the transition portion 330. However, the flow passage is already divided into the plurality of conduits by the separation wall 306 at a position upstream of the end portion 304 of the first pipe 302, and therefore the material powder is already distributed by the separation wall 306 of the first pipe 302. This can make it less likely for the material powder to be unevenly distributed due to a disturbed flow of the carrier gas according to a change in the cross-sectional area of the flow passage at the transition portion 330. In the embodiment illustrated in Figs. 7A to 7E, the flow passage is divided at the upstream end portion and the intermediate position of the separation wall 306 in two steps, unlike the embodiment illustrated in Figs. 6A to 6D. This can reduce an area of the end portion of the separation wall 306 against which the material powder collides, thereby further reducing the unevenness of the distribution of the material powder compared to when the flow passage is divided into many passages all at once.

Desirably, in any of the above-described embodiments, the separation wall 306 of the first pipe 302 is configured in such a manner that a length thereof extending upstream from the downstream end portion 304 of the first pipe 302 is equal to or longer than ϕ, assuming that ϕ represents the diameter of the first pipe 302.

In one embodiment, the first pipe 302 including the separation wall 306 formed in the above-described manner, the second pipes 350, and the transition portion 330 can be made from the same kind of material as the material powder supplied to the AM apparatus. For example, the first pipe 302, the second pipes 350, and the transition portion 330 can be made from a metal material or a resin material. As one embodiment, the first pipe 302, the second pipes 350, and the transition portion 330 can be made from SUS. Further, in one embodiment, desirably, the first pipe 302 including the separation wall 306, the second pipes 350, and the transition portion 330 are made from an electrically conductive material for antistatic purpose. For example, these members can be made from a resin material or a metal material provided with electric conductivity. Further, desirably, these materials are used in an electrically grounded state in the AM apparatus.

As one embodiment, the first pipe 302, the second pipes 350, and the transition portion 330 are formed by a known AM method. Manufacturing the first pipe 302, the second pipes 350, and the transition portion 330 by the AM method can facilitate smooth formation of the connection portion between the pipes and the change in the shape of the transition portion.

At least the following technical ideas can be recognized from the above-described embodiments.
[Configuration 1] According to a configuration 1, an AM apparatus for manufacturing a fabrication object is provided. The AM apparatus includes a DED nozzle. The DED nozzle includes a powder port provided at a distal end of a main body of the DED nozzle and configured to eject a powder material therefrom, and a powder passage provided in communication with the powder port and configured to allow the powder material to pass through inside the main body of the DED nozzle. The AM apparatus further includes a first pipe, a separation wall extending from an end portion of the first pipe toward an upstream side inside the first pipe, and a plurality of second pipes connected to the end portion of the first pipe. The separation wall divides the end portion of the first pipe into a plurality of regions, and the plurality of second pipes is connected to the plurality of regions of the first pipe, respectively. The second pipes are connected to the powder passage of the DED nozzle.
[Configuration 2] According to a configuration 2, in the AM apparatus according to the configuration 1, a length of the separation wall extending upstream from the end portion of the first pipe is longer than ϕ, assuming that ϕ represents an inner diameter of the first pipe.
[Configuration 3] According to a configuration 3, in the AM apparatus according to the configuration 1 or 2, the separation wall of the first pipe includes a first separation wall equally dividing an inside of the first pipe into a plurality of regions, and a second separation wall further dividing each of the regions equally divided by the first separation wall into a plurality of regions.
[Configuration 4] According to a configuration 4, in the AM apparatus according to any one of the configurations 1 to 3, the first pipe and the second pipe are connected via a transition portion. The transition portion includes a transition portion separation wall connected to the separation wall of the first pipe and is divided into a plurality of regions by the transition portion separation wall, and the plurality of second pipes is connected to the plurality of regions of the transition portion, respectively.
[Configuration 5] According to a configuration 5, in the AM apparatus according to the configuration 4, a cross-sectional area of each of the plurality of regions at the branch portion is approximately s/n, assuming that s represents an inner cross-sectional area of the first pipe and n represents the number of the plurality of regions at the end portion of the first pipe.
[Configuration 6] According to a configuration 6, in the AM apparatus according to any one of the configurations 1 to 5, the AM apparatus is configured in such a manner that the powder material and carrier gas are discharged from the powder port of the DED nozzle at a flow speed equal to or lower than 10 m/s.

### REFERENCE SIGNS LIST

- 100: AM apparatus
- 200: head
- 202: laser source
- 204: material powder source
- 206: gas source
- 250: nozzle
- 252: first passage
- 254: second passage
- 300: powder supply mechanism
- 302: first pipe
- 304: end portion
- 306: separation wall
- 330: transition portion
- 332: end portion
- 336: transition portion separation wall
- 350: second pipe
- M: fabrication object

## Claims

1. An AM apparatus for manufacturing a fabrication object, the AM apparatus comprising:
a DED nozzle, the DED nozzle including
a powder port provided at a distal end of a main body of the DED nozzle and configured to eject a powder material therefrom, and a powder passage provided in communication with the powder port and configured to allow the powder material to pass through inside the main body of the DED nozzle,
the AM apparatus further comprising:
a first pipe;
a separation wall extending from an end portion of the first pipe toward an upstream side inside the first pipe; and
a plurality of second pipes connected to the end portion of the first pipe,
wherein the separation wall divides the end portion of the first pipe into a plurality of regions, and the plurality of second pipes is connected to the plurality of regions of the first pipe, respectively, and
wherein the second pipes are connected to the powder passage of the DED nozzle.

2. The AM apparatus according to claim 1, wherein a length of the separation wall extending upstream from the end portion of the first pipe is longer than ϕ, assuming that ϕ represents an inner diameter of the first pipe.

3. The AM apparatus according to claim 1 or 2, wherein the separation wall of the first pipe includes
a first separation wall equally dividing an inside of the first pipe into a plurality of regions, and
a second separation wall further dividing each of the regions equally divided by the first separation wall into a plurality of regions.

4. The AM apparatus according to any one of claims 1 to 3, wherein the first pipe and the second pipe are connected via a transition portion, and
wherein the transition portion includes a transition portion separation wall connected to the separation wall of the first pipe and is divided into a plurality of regions by the transition portion separation wall, and the plurality of second pipes is connected to the plurality of regions of the transition portion, respectively.

5. The AM apparatus according to claim 4, wherein a cross-sectional area of each of the plurality of regions at the branch portion is approximately s/n, assuming that s represents an inner cross-sectional area of the first pipe and n represents the number of the plurality of regions at the end portion of the first pipe.

6. The AM apparatus according to any one of claims 1 to 5, wherein the AM apparatus is configured in such a manner that the powder material and carrier gas are discharged from the powder port of the DED nozzle at a flow speed equal to or lower than 10 m/s.
